Europäisches Patentamt

European Patent Office

Office européen des brevets

(11) Publication number: **0 233 566**
**A2**

# (12) EUROPEAN PATENT APPLICATION

(21) Application number: **87101721.6**

(22) Date of filing: **07.02.87**

(51) Int. Cl.⁴: **A23C 9/123** , A23C 9/146 , A23C 9/144 , A23C 13/16

(30) Priority: **19.02.86 GB 8604041**

(43) Date of publication of application:
**26.08.87 Bulletin 87/35**

(84) Designated Contracting States:
**AT BE CH DE ES FR GB GR IT LI NL SE**

(71) Applicant: **UNILEVER NV**
**Burgemeester s'Jacobplein 1 P.O. Box 760**
**NL-3000 DK Rotterdam(NL)**
**BE CH DE ES FR GR IT LI NL SE AT**
Applicant: **UNILEVER PLC**
**Unilever House Blackfriars P.O. Box 68**
**London EC4P 4BQ(GB)**
**GB**

(72) Inventor: **Bodor, Janos**
**Prins Hendriklaan 38**
**NL-2281 EC Rijswijk (Z-H)(NL)**
Inventor: **Schoenmakers, Albert Wijnand**
**Beukenlaan 10**
**B-9330 Dendermonde(BE)**
Inventor: **Verhue, Walter Maurits Mark**
**Molendijk 9**
**NL-3233 LN Oostvoorne(NL)**

(74) Representative: **Dries, Antonius Johannes**
**Maria et al**
**Unilever N.V. Patent Division P.O. Box 137**
**NL-3130 AC Vlaardingen(NL)**

(54) Fermented milk products and process for producing said products.

(57) Demineralized and deacidified, bacteriologically soured milk products or concentrates thereof, such as cream, yoghurt, quark and cheese, and a process for producing said products which involves electrodialysis or treatment of the milk products with ion exchange resins.

EP 0 233 566 A2

Xerox Copy Centre

## FERMENTED MILK PRODUCTS AND PROCESS FOR PRODUCING SAID PRODUCTS

The present invention relates to fermented milk products and particularly to demineralized and deacidified, bacteriologically soured products.

By milk or milk product we understand whole milk, skimmilk, whey, buttermilk, butter serum or concentrates thereof such as membrane-filtered milk, buttermilk, cream, yoghurt, cheese and quark.

There is need of acid milk products with a pH of 2.5-5.5, preferably from 4.0-5.5, since such pH's contribute to a long shelf life without deterioration of the product due to growth of microorganisms.

A disadvantage associated with milk products having low pH's is their sour taste, which is objectionable to some consumers.

The present invention provides (i) products displaying a reduced acidity while having a pH within the above-given range and (ii) a process for producing such products.

It is another object of the present invention to provide products with an improved dairy flavour and particularly an increased diacetyl content.

The fermented milk products according to the invention consist of demineralized and deacidified, bacteriologically soured milk or milk products or concentrates thereof as defined above, having a pH lower than 5.5 and containing less than 40 milliequivalent acid/kg.

By demineralization and deacidification we do not necessarily mean that all the acid and all the salts originally present in the starting material are removed, but rather that the milk or milk products are treated such that they contain less than 80% and preferably from 0.5% to 70% of the amount of salts and acid present in the starting material.

The total amount of acid of products with a pH ranging from 2.5 to 5.5, and preferably ranging from 4.0 to 5.5, will generally be less than 40 milliequivalent/kg and preferably range from 1-25 milliequivalent/kg.

The mineral content for demineralized milk will be within the following ranges (for other milk products the corresponding values can easily be assessed):

Potassium : 0-1300, preferably 0-350 mg/kg
Sodium : 0-500, preferably 0-150 mg/kg
Calcium : 0-720, preferably 0-250 mg/kg
Magnesium : 0-80, preferably 0-20 mg/kg
Chloride : 0-800, preferably 0-200 mg/kg
Phosphorus* : 0-800, preferably 0-600 mg/kg
Citrate : 0-1000, preferably 0-400 mg/kg
Lactate : 0-8000, preferably 0-2500 mg/kg
* total of organic + organic phosphorus.

According to the invention, bacteriologically soured products are preferably obtained by using bacterial cultures which produce diacetyl or diacetyl precursors. Such cultures can be selected from the group consisting of Streptococcus lactis, Streptococcus cremoris, Streptococcus diacetyllactis, Leuconostoc cremoris, Leuconostoc mesenteroides, Streptococcus thermophilus, Lactobacillus bulgaricus, Lactobacillus acidophilus, Bifidobacterium bifidus, Bifidobacterium infantis, Lactobacillus helveticus, Lactobacillus casei, Propionibacterium shermanii.

Preferably, Streptococcus diacetyllactis, Leuconostoc cremoris or a mixture of both cultures is used, since these cultures produce a high amount of diacetyl.

The fermented products according to the invention can contain up to 150 mg diacetyl/kg. Preferably and generally, the diacetyl content will range from 2 to 20 mg/kg.

The products according to the invention may further contain additives such as flavouring agents, like cocoa powder or sodium chloride, and preservatives.

The products of the present invention are obtainable according to a process comprising in its most general form:

(1) acidifying milk or a milk product from whole milk, skimmilk, whey, buttermilk and butter serum or concentrates thereof by applying bacteriological souring and/or by adding an acid or an acid-generating substance to achieve a pH ranging from 2.5-5.5; and

(2) subjecting the acidified milk product to a demineralization/deacidification treatment to obtain a product having a pH lower than 5.5 and preferably ranging from 4.0-5.5 and containing less than 40 meq acid/kg.

More specifically, there are two ways of performing the process outlined above.

A first method comprises:

2

(1) acidifying milk or a milk product with an acid or an acid-generating substance to achieve a pH below 5.5,

(2) subjecting the acidified milk or milk product to a demineralization/deacidification treatment,

(3) if necessary, adding an alkaline substance to raise the pH to a value above 5.5 and preferably to a value ranging from 5.8-6.8, and, if necessary, pasteurizing the mixture,

(4) achieving bacteriological souring of the mixture.

The advantage associated with this method lies in the excellent texture of the products obtained according to this method.

A second method comprises:

(1) bacteriologically souring milk or a milk product and subsequently

(2) subjecting the bacteriologically soured milk or milk product to a demineralization/deacidification treatment.

Demineralization is preferably carried out by electrodialysis or by a treatment with ion exchange resins. Electrodialysis is the ideal method because of its low operating costs, little or no loss of protein and lactose, small volumes of effluents and long life of the membranes.

Electrodialysis is preferably carried out using a system of cationic membranes consisting of styrene divinyl benzene or styrene butadiene carrying sulphonic groups, and anionic membranes of the same polymers but carrying quaternary ammonium groups.

Very useful apparatuses for the purpose of the invention are those marketed by SRTI (Société de Recherches Techniques et Industrielles), France, and by IONICS, U.S.A.

Electrodialysis is mostly carried out at a temperature ranging from 0-35°C. The higher temperatures contribute to a less time-consuming process, whereas the lower temperatures help avoiding coagulation of the protein, microbiological problems and clogging of the membranes. Electrodialysis is therefore preferably carried out between 0 and 20°C and ideally between 5 and 15°C.

Applicants have found it very appropriate to homogenize the soured acidified product prior to the demineralization treatment, in order to achieve a better dispersion/solubilization of the protein and to avoid clogging of the membranes.

Homogenization is preferably carried out under pressure, for instance at 100-200 bars.

Applicants have also found that it is very useful, during or after the bacteriological souring, to aerate, preferably under pressure, the milk or milk product in order to enhance the conversion of diacetyl precursors into diacetyl.

Another way of achieving this consists in heating the mixture to a temperature ranging from e.g. 50-90°C. Such heating also prevents post-souring of the mixture.

Still another way of achieving a high level of diacetyl consists in fermenting the mixture and optionally adding an extra amount of acid, e.g. lactic acid, hydrochloric acid or citric acid, to achieve a pH ranging from 1.0 to 4.5 and preferably from 2.0 to 3.0. Such treatment can be combined with a subsequent aeration or a heat treatment or with both aeration and a heat treatment.

Such treatments for enhancing diacetyl production turned out to be extremely useful in avoiding losses of diacetyl precursors, ultimately leading to loss of flavour during the demineralization treatment.

The demineralized, deacidified milk products according to the invention can be used as such in food products or they can be further concentrated by evaporation, reverse osmosis, ultrafiltration, heating between 35 and 85°C, isoelectric precipitation followed by separation or filtration, or combinations of these techniques, to obtain a concentrate such as cheese, quark, etc.

The invention will now be illustrated in the following Examples.

## Example 1

Milk was pasteurized for 5 minutes at 90°C and was subsequently cooled to 20°C.

The milk was inoculated with a commercially available culture containing Streptococcus diacetyllactis, Streptococcus cremoris and Leuconostoc cremoris and fermented overnight to obtain soured skimmilk of pH = 4.50.

The fermented milk was subsequently homogenized at 150 bars.

The fermented milk was electrodialysed in an AQUALIZER PIO produced and marketed by SRTI - (FRANCE), equipped with 30 cell pairs anionic and cationic membranes (type Selemion from ASAHI, Japan).

Electrodialysis was carried out for one hour at 30°C at a voltage of 1.5 V per cell pair. Samples were taken to check acidity, conductivity and diacetyl content. After one hour the conductivity had decreased from about 1.8 mS to about 0.04 mS. The pH decreased slightly to 4.4. Titration of the milk to neutrality, using sodium hydroxide, indicated that the titratable acid content decreased from about 81 milli-equivalent/kg to about 24 milli-equivalent/kg.

The product contained after electrodialysis about 2.5 mg/kg diacetyl (determined by head space gas chromatography).

Analysis of the product before and after electrodialysis revealed the following composition:

| before | after |
|---|---|
| 1267 mg K/kg | 7 mg K/kg |
| 362 mg Na/kg | 12 mg Na/kg |
| 923 mg Ca/kg | 2 mg Ca/kg |
| 120 mg Mg/kg | 15 mg Mg/kg |
| 1000 mg Cl⁻/kg | 50 mg Cl⁻/kg |
| 900 mg P/kg | 300 mg P/kg |
| 300 mg citrate/kg | 100 mg citrate/kg |
| 8400 mg lactate/kg | 120 mg lactate/kg |

The electrodialysed, soured milk of pH 4.4 was slowly heated to about 35°C and the coagulate was subsequently heated at 55°C and filtrated to obtain a cheese resembling cottage cheese, having a very mild acidic taste and a very fresh dairy taste.

Example 2

Example 1 was repeated, using buttermilk as the starting material. The procedure was identical with that of Example 1.

During 1 hour dialysis, the electric conductivity decreased from 1.7 mS to 0.13 mS. The pH increased from 4.5 to 4.6. The titratable (to neutrality) amount of acid decreased from about 88 milliequivalent/kg to about 23 milliequivalent/kg. The amount of lactic acid decreased from 7500 mg/kg to 100 mg/kg.

The diacetyl content was 5 mg/kg before electrodialysis and fell to 4.5 mg/kg after electrodialysis.

The electrodialysed product contained:

| before | after |
|---|---|
| 1120 mg K/kg | 26 mg K/kg |
| 1060 mg Na/kg | 14 mg Na/kg |
| 1030 mg Ca/kg | 4 mg Ca/kg |
| 124 mg Mg/kg | 7 mg Mg/kg |
| 1200 mg Cl⁻/kg | 50 mg Cl⁻/kg |
| 980 mg P/kg | 350 mg P/kg |

The demineralized buttermilk, on consumption, was considered in taste to be superior to fermented butter milk.

Example 3

The procedure of Example 1 was repeated except that, after fermentation, the pH was lowered to 3.3 by addition of HCl and that the fermented milk was stirred vigorously to aerate it, whereafter the pH was raised to 4.6.

The amount of diacetyl determined after electrodialysis was 35 mg/kg.

Example 4

Skimmilk powder was dissolved in tap water to obtain a reconstituted milk with 12% non-fat dry matter. The milk was pasteurized for 5 minutes at 75°C and subsequently cooled to 4°C. By adding 30 g/l diluted - (10% W/W) lactic acid, the pH was adjusted to 5.1

The milk was homogenized at 100 bar and electrodialysed using the apparatus described in Example 1 at 22°C for 60 minutes. The conductivity decreased from 1.69 mS to 0.16 mS. The pH increased slightly to 5.3. After electrodialysis, the pH was adjusted to 5.8 using 10 ml 1N NaOH per litre milk. The neutralized milk was repasteurized for 5 minutes at 75°C, cooled to 42°C and inoculated with a commercial yoghurt culture containing Streptococcus thermophillus, Lactobacillus bulgaricus.

The ripening to pH 4.5 took 3 hours.

The end product had a titratable amount of acid of 31 meq/kg. The lactic acid content was 180 mg/kg. The product had a normal thick yoghurt structure, a pleasant yoghurt flavour but a very mild, more sweet than acidic taste.

Example 5

Example 4 was repeated, but using buttermilk powder and a commercially available sour cream culture containing: Streptococcus cremoris, Streptococcus diacetylactis, Leuconostoc cremoris, Streptococcus lactis. Culturing was carried out at 20°C for 16 hours to pH 4.8, 70 mg/kg lactic acid. The ripened buttermilk was mixed with 1.5% W/W cocoa powder, 3% sugar, 0.06% potassium sorbate and 0.05% sodium chloride.

The chocolate drink obtained had a fresh, very pleasant taste, free of any acidic note.

Example 6

Dairy cream (39% fat) acidified with 1N HCl to pH 5.2 was treated with a mixture of cationic and anionic ion exchange resins (100 g/kg cationic ion exchange resin (H$^+$ form) type AG 50W-X8 (ex BIO-RAD), 120 g/kg anionic ion exchange resin (OH$^-$ form) type AG 2-X8 (ex BIO-RAD) at 35°C for 10 minutes). The ion exchange resins were separated via a sieve and the cooled cream was inoculated with a commercially available sour cream culture of the type used in Example 5.

Ripening took place at 20°C overnight. The resulting sour cream had a pH of 4.65 and a titratable amound of acid of 22 meq/kg. The lactic acid content was 120 mg/kg.

The sour cream had a pleasant, very mild acidic taste.

**Claims**

1. Demineralized and deacidified, bacteriologically soured milk or milk product, having a pH lower than 5.5 and containing less than 40 milliequivalent acid/kg.

2. Demineralized and deacidified milk or milk product according to claim 1, having a pH ranging from 4.0 to 5.5 and containing 1-25 milliequivalent acid/kg.

3. Demineralized and deacidified milk or milk product according to claim 1, which contains diacetyl in an amount ranging from 1 to 150 mg/kg, preferably from 2-20 mg/kg.

4. Demineralized and deacidified milk or milk product according to claim 1, wherein the milk or milk product has been subjected to souring with a bacterial culture selected from Streptococcus lactis, Streptococcus cremoris, Streptococcus aromaticus, Streptococcus citrophilus, Streptococcus diacetyllactis, Betacoccus cremoris, Leuconostoc citrovorum, Leuconostoc cremoris, Lactobacillus helveticus, Lactobacillus casei and Propionibacterium shermanii.

5. Demineralized and deacidified milk or milk product according to claim 1, containing less than 80% and preferably 0.5-70% of the amount of acid and salt present in the corresponding non-demineralized, bacteriologically soured product.

6. Demineralized and deacidified milk or milk product according to claim 1, containing:

0-950, preferably 0-350 mg K/kg

0-500, preferably 0-150 mg Na/kg

0-720, preferably 0-250 mg Ca/kg

0-80, preferably 0-20 mg Mg/kg

0-800, preferably 0-20 mg Cl⁻/kg

0-800, preferably 0-600 mg P/kg (total of organic and inorganic phosphorus)

0-1000 preferably 0-400 mg citrate/kg

0-10000 preferably 0-1500 mg lactate/kg.

7. Demineralized and deacidified milk or milk product according to claim 1, wherein the milk or milk product is selected from whole milk, skimmilk, cream, whey, buttermilk and butter serum or a concentrate thereof, including membrane-filtered milk, buttermilk, cream, yoghurt, cheese and quark, optionally containing flavouring ingredients and preservatives.

8. A process for producing demineralized and deacidified soured milk or milk product, which comprises:

(1) acidifying milk or a milk product from whole milk, skimmilk, whey, buttermilk and butter serum or concentrates thereof by applying bacteriological souring and/or by adding an acid or an acid-generating substance to achieve a pH lower than 5.5 and preferably ranging from 2.5-5.5; and

(2) subjecting the acidified milk product to a demineralization/deacidification treatment to obtain a product having a pH lower than 5.5, preferably ranging from 4.0 to 5.5, and containing less than 40 meq acid/kg.

9. A process according to claim 10, which comprises:

(1) acidifying milk or a milk product with an acid or an acid-generating substance to achieve a pH below 5.5,

(2) subjecting the acidified milk or milk product to a demineralization/deacidification treatment,

(3) if necessary, adding an alkaline substance to raise the pH to a value above 5.5 and preferably to a value ranging from 5.8-6.8, and, if necessary, pasteurising the mixture, and

(4) achieving bacteriological souring of the mixture.

10. A process according to claim 8, which comprises:

(1) bacteriologically souring milk or a milk product and subsequently

(2) subjecting the bacteriologically soured milk or milk product to a demineralization/deacidification treatment.

11. A process according to claim 8, wherein the acidified milk or milk product is homogenized, preferably under a pressure ranging from 100-200 bars, prior to the demineralization/deacidification treatment.

12. A process according to claim 10, wherein the milk or milk product is aerated, preferably under pressure, during or after the bacteriological souring.

13. A process according to claim 10 and 11, wherein the soured product is heated, preferably to a temperature ranging from 50-90°C, prior to the demineralization treatment.

14. A process according to claim 10, wherein the bacteriologically soured milk or milk product is further acidified to a pH ranging from 2 to 3 by adding acid, and is subsequently aerated or heated or subjected to both aeration and heating to enhance diacetyl formation.

15. A process according to claim 8, wherein bacteriological souring is carried out using Streptococcus lactis, Streptococcus cremoris, Streptococcus aromaticus, Streptococcus citrophilus, Streptococcus diacetyllactis, Betacoccus cremoris, Leuconostoc citrovorum, Leuconostoc cremoris, Lactobacillus helveticus, Lactobacillus casei and Propionibacterium shermanii.

16. A process according to claim 8, wherein the demineralization treatment involves electrodialysis or treatment with ion exchange resins.

17. A process according to claim 8, wherein electrodialysis is carried out using a system of cationic membranes consisting of styrene divinyl benzene or styrene butadiene carrying sulphonic groups, and anionic membranes of the same polymers but carrying quaternary ammonium groups.

18. A process according to claim 8, wherein electrodialysis is carried out at a temperature ranging from 0-35°C, preferably 2-20°C.

0 233 566

19. A process according to claim 18, further comprising a concentration step involving subjecting the demineralized/deacidified milk or milk product to reverse osmosis, ultrafiltration, heating and isoelectric precipitation, and subsequently separating and/or filtrating the thus treated material to obtain a proteinaceous concentrate.

Claims for the following contracting state: Austria

1. A process for producing demineralized and deacidified soured milk or milk product, which comprises:
(1) acidifying milk or a milk product from whole milk, skimmilk, whey, buttermilk and butter serum or concentrates thereof by applying bacteriological souring and/or by adding an acid or an acid-generating substance to achieve a pH lower than 5.5 and preferably ranging from 2.5-5.5; and
(2) subjecting the acidified milk product to a demineralization/deacidification treatment to obtain a product having a pH lower than 5.5, prererably ranging from 4.0 to 5.5, and containing less than 40 meq acid/kg.

2. A process according to claim 1, which comprises:
(1) acidifying milk or a milk product with an acid or an acid-generating substance to achieve a pH below 5.5,
(2) subjecting the acidified milk or milk product to a demineralization/deacidification treatment,
(3) if necessary, adding an alkaline substance to raise the pH to a value above 5.5 and preferably to a value ranging from 5.8-6.8, and, if necessary, pasteurising the mixture, and
(4) achieving bacteriological souring of the mixture.

3. A process according to claim 1, which comprises:
(1) bacteriologically souring milk or a milk product and subsequently
(2) subjecting the bacteriologically soured milk or milk product to a demineralization/deacidification treatment.

4. A process according to claim 1, wherein the acidified milk or milk product is homogenized, preferably under a pressure ranging from 100-200 bars, prior to the demineralization/deacidification treatment.

5. A process according to claim 3, wherein the milk or milk product is aerated, preferably under pressure, during or after the bacteriological souring.

6. A process according to claims 3 and 4, wherein the soured product is heated, preferably to a temperature ranging from 50-90°C, prior to the demineralization treatment.

7. A process according to claim 3, wherein the bacteriologically soured milk or milk product is further acidified to a pH ranging from 2 to 3 by adding acid, and is subsequently aerated or heated or subjected to both aeration and heating to enhance diacetyl formation.

8. A process according to claim 1, wherein bacteriological souring is carried out using Streptococcus lactis, Streptococcus cremoris, Streprococcus aromaticus, Streptococcus citrophilus, Streptococcus diacetyllactis, Betacoccus cremoris, Leuconostoc citrovorum, Leuconostoc cremoris, Lactobacillus helveticus, Lactobacillus casei and Propionibacterium shermanii.

9. A process according to claim 1, wherein the demineralization treatment involves electrodialysis or treatment with ion exchange resins.

10. A process according to claim 1, wherein electrodialysis is carried out using a system of cationic membranes consisting of styrene divinyl benzene or styrene butadiene carrying sulphonic groups, and anionic membranes of the same polymers but carrying quaternary ammonium groups.

11. A process according to claim 1, wherin electrodialysis is carried out at a temperature ranging from 0-35°C, preferably 2-20°C.

12. A process according to claim 11, further comprising a concentration step involving subjecting the demineralized/deacidified milk or milk product to reverse osmosis, ultrafiltration, heating and isoelectric precipitation, and subsequently separating and/or filtrating the thus treated material to obtain a proteinaceous concentrate.

7